# DEMANDE DE BREVET EUROPEEN

(11) **EP 1 070 453 A1**
(43) Date de publication de la demande: **24.01.2001**
(21) Numéro de dépôt: 99460049.2
(22) Date de dépôt: 22.07.1999
(51) Int. Cl.: A01K 11/00

(54) **Dispositif d'identification infalsifiable à usage unique pour animaux d'élevage**

(71) Demandeur: EUROPLASTIQUES S.A., 53007 Laval Cédex (FR)
(72) Inventeur: Barberot, Nicolas, 53240 St.-Jean Sur Mayenne (FR); Manach, Jacques, 53000 Laval (FR); Martin, Jean-Claude, 49500 Chaze Sur Argos (FR)
(74) Mandataire: Maillet, Alain

(57) **Abrégé**

La présente invention concerne un dispositif d'identification infalsifiable à usage unique pour animaux d'élevage. Il est constitué d'une partie mâle A comprenant un poinçon (100) et une première étiquette (500) ainsi que d'une partie femelle B comprenant un verrou (300) et une seconde étiquette (600), ledit poinçon (100) étant prévu pour s'emboîter de manière irréversible dans ledit verrou (300). Ledit poinçon (100) et ladite première étiquette (500), d'une part, et ledit verrou (300) et ladite seconde étiquette (600), d'autre part, sont des éléments distincts rendus solidaires les uns des autres par un surmoulage soudant.

## Description

La présente invention concerne un dispositif d'identification infalsifiable à usage unique pour animaux d'élevage. Ce dispositif prend la forme d'une étiquette qui peut être fixée par poinçonnage sur une oreille de l'animal à identifier. L'invention s'applique notamment au bétail.

Dès leur naissance, les animaux d'élevage font l'objet de soins vétérinaires afin de suivre leur croissance. Pour surveiller une population importante d'animaux, il est indispensable de pouvoir identifier chaque animal pour, périodiquement, suivre son état sanitaire, et le cas échéant, lui prodiguer les soins nécessaires.

Par ailleurs, l'éleveur est tenu, peu de temps après la naissance d'un animal, de lui faire porter une étiquette d'identification pour éviter toute fraude qui viserait à tromper le consommateur sur l'origine de l'animal. L'identification de chaque animal permet alors de retrouver *a posteriori* son origine génétique ou sa provenance géographique.

Pour pouvoir identifier des animaux présentant des caractéristiques communes, un éleveur achète un lot d'étiquettes d'identification correspondant au nombre de ses animaux. Les références de ce lot d'étiquettes d'identification sont consignées dans un registre qui est ensuite transmis aux services vétérinaires du département du lieu d'élevage. Les étiquettes d'identification sont apposées sur les animaux du lot.

Le code et le numéro de chaque étiquette sont uniques.

L'éleveur consigne les soins fournis aux animaux dans un cahier de stabulation en même temps que les références figurant sur les étiquettes d'identification des animaux.

Les dispositifs d'identification pour animaux d'élevage connus sont généralement constitués d'une partie mâle comprenant un poinçon et une première étiquette et d'une partie femelle comprenant un verrou et une seconde étiquette. Le poinçon est prévu pour s'emboîter de manière irréversible dans le verrou.

Les dispositifs d'identification connus sont généralement fabriqués dans un même matériau. Ils sont soit trop rigides, soit trop souples. Dans le premier cas, la fixation mécanique de la partie mâle à la partie femelle est fiable, mais la rigidité du dispositif a pour inconvénient d'engendrer l'accrochage des étiquettes et la perte par arrachement du dispositif pendant la vie de l'animal.

Dans le second cas, les étiquettes risquent moins d'être arrachées dans la vie de l'animal, mais la fixation mécanique de la partie mâle à la partie femelle n'est pas assez résistante.

Un but de l'invention est donc de proposer un dispositif d'identification infalsifiable à usage unique pour animaux d'élevage qui ne présente pas les inconvénients décrits ci-dessus.

A cet effet, un dispositif d'identification infalsifiable est remarquable en ce que ledit poinçon et ladite première étiquette, d'une part, et ledit verrou et ladite seconde étiquette, d'autre part, sont des éléments distincts rendus solidaires les uns des autres par un surmoulage soudant, c'est-à-dire qui les lie entre eux.

Ainsi, le dispositif d'identification infalsifiable permet de distinguer, d'une part, les fonctions remplies par le verrou et le poinçon et, d'autre part, les fonctions remplies par les étiquettes à l'inverse des produits injectés à matériau unique.

Selon une autre caractéristique de l'invention, les étiquettes sont réalisées dans une bande enduite constituée d'une trame tissée T en fibre de polyester enduite sur ses deux faces d'une couche O de PVC.

Selon une autre caractéristique de l'invention, les étiquettes sont découpées dans la bande enduite.

Selon une autre caractéristique de l'invention, les étiquettes comportent une face pourvue d'un marquage de type code barre et/ou référence alphanumérique réalisé par une opération de transfert sur le revers d'un film transparent avant son pelliculage à chaud sur la face.

La présente invention s'applique également à des dispositifs du type où le poinçon comporte une pointe conique et un tronçon coaxiaux entre eux définissant ensemble un épaulement.

Ledit verrou présente un évidement intérieur recevant au moins deux pattes de verrouillage orientées vers l'intérieur dudit évidement, l'épaulement dudit poinçon étant prévu pour pouvoir coopérer avec une portion de couronne réalisant la terminaison desdites pattes de verrouillage.

Selon une autre caractéristique de l'invention, ledit poinçon comporte une zone de striction S formée par une gorge sur sa périphérie.

Selon une autre caractéristique de l'invention, un circuit électronique radiofréquence d'identification est disposé en sandwich entre la face et le film pelliculé à chaud ultérieurement sur la face.

Selon une autre caractéristique de l'invention, un bouchon peut être rapporté sur une seconde extrémité cylindrique du cylindre dudit verrou.

Selon une autre caractéristique de l'invention, le poinçon est mobile en rotation par rapport au verrou après l'emboîture de l'un dans l'autre.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective du dispositif d'identification infalsifiable à usage unique pour animaux d'élevage selon l'invention,
la Fig. 2 représente une vue en coupe du dispositif d'identification infalsifiable à usage unique pour animaux d'élevage selon l'invention,
la Fig. 3a représente une vue en perspective d'une première étiquette installée sur le dispositif d'identification infalsifiable à usage unique pour animaux d'élevage selon l'invention,
la Fig. 3b représente une vue agrandie en écorché d'un bord d'une première étiquette installée sur le dispositif d'identification infalsifiable à usage unique pour animaux d'élevage selon l'invention et,
la Fig. 4 représente une vue en perspective d'une seconde étiquette installée sur le dispositif d'identification infalsifiable à usage unique pour animaux d'élevage selon l'invention.

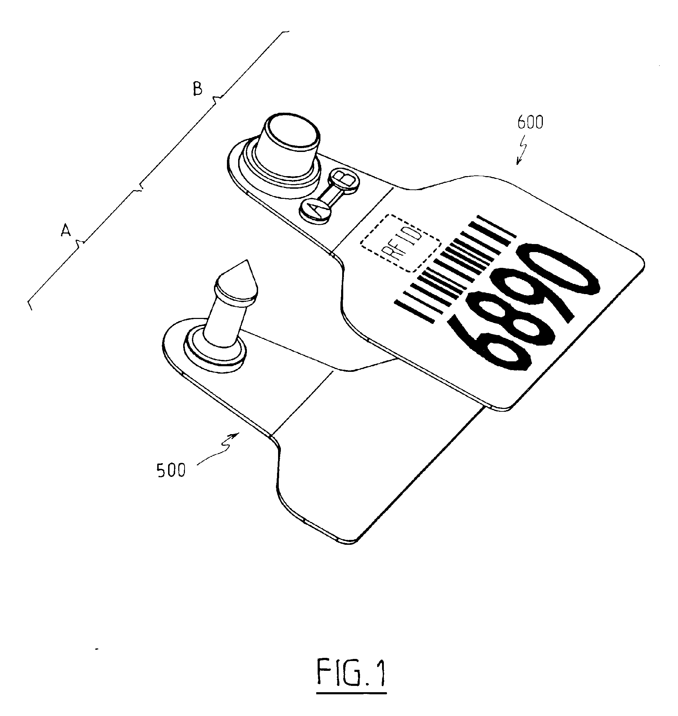

Le dispositif représenté à la Fig. 1 est constitué d'une partie mâle A comportant une première étiquette 500, et d'une partie femelle B comportant une seconde étiquette 600.

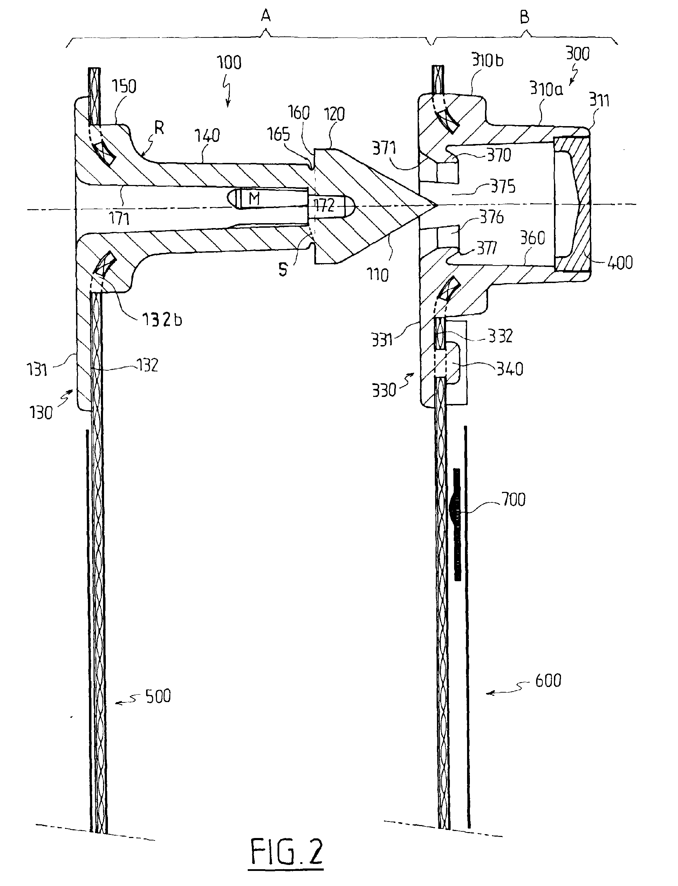

A la Fig. 2, la partie mâle A comprend un poinçon 100 dont l'une de ses extrémités présente la forme d'une pointe conique 110 acérée se raccordant à une partie cylindrique 120 de courte longueur. L'autre extrémité du poinçon 100 est une embase 130 de forme trapézoïdale dont les plans extérieur 131 et intérieur 132 sont perpendiculaires à l'axe de la pointe conique 110.

L'embase 130 et la pointe conique 110 sont réunies par un tronçon cylindrique 140, coaxial à la pointe conique 110, qui se raccordent, d'une part, au moyen d'une forme présentant un rayon R, à une partie cylindrique 150, prolongeant l'embase 130 à partir de son plan intérieur 132 et, d'autre part, à la partie cylindrique 120 par un épaulement 160.

Par ailleurs, des plots de surmoulage 132b sont prévus sur le plan intérieur 132.

Une gorge 165 est réalisée dans le plan radial formé par l'épaulement 160 entre ledit épaulement 160 et le tronçon cylindrique 140.

Le tronçon cylindrique 140 est pourvu d'un premier évidement 171 coaxial débouchant au travers de l'embase 130.

L'évidement 171 comprend trois méplats M disposés à 120° les uns des autres et utilisés pour permettre l'adaptation du serrage à différentes pinces de pose pour maintenir le poinçon 100 pendant la pose.

L'évidement 171 est prolongé par un second évidement 172 de forme légèrement conique également, de diamètre plus réduit que le premier évidement 171, et se prolongeant partiellement dans le poinçon 100 pour se terminer en une extrémité hémisphérique, ce qui permet la transmission des efforts de poinçonnage pendant la pose.

L'épaisseur de la paroi du tronçon cylindrique 140 est réduite entre la gorge 165 et le premier évidement 171 afin de former une zone de striction S (représentée en traits pointillés à la Fig. 1.)

Le poinçon 100 de la partie mâle A peut être fabriqué par un procédé de surmoulage par injection plastique. La matière utilisée est, dans un mode de réalisation avantageux, du polyuréthanne ou du polychlorure de vinyle nitrile NBR ou un élastomère thermoplastique TPE, PE métallocène permettant d'offrir une bonne souplesse au poinçon 100.

La partie femelle B comprend un verrou 300 qui est constitué d'un cylindre 310a et d'une portion cylindrique 310b prolongée elle-même par une embase 330 de forme trapézoïdale. Les plans extérieur 331 et intérieur 332 de cette embase 330 sont perpendiculaires à l'axe du cylindre 310a.

En saillie sur le plan intérieur 332, sont prévus des plots de surmoulage 340.

Un évidement 360 de forme légèrement conique traverse de part en part le cylindre 310a.

Un bouchon 400 cylindrique peut être assemblé par une soudure ultrasonique à une extrémité cylindrique 311 du cylindre 310a de manière à obturer d'un côté l'évidement 360.

A l'opposé de l'extrémité cylindrique 311, deux pattes de verrouillage 370 de structure rigide en forme de demi-lune font saillie sur la partie interne de l'évidemment 360.

Les pattes de verrouillage 370 sont orientées vers l'intérieur de l'évidement 360. Elles présentent une paroi conique 371 prévue pour coopérer avec la pointe conique 110 de manière à faciliter son montage dans la partie B.

Les pattes de verrouillage 370 sont séparées l'une de l'autre par une ouverture 375 constituée par le prolongement naturel de l'évidement 360, afin de permettre le passage de la pointe conique 110.

Une seule de ces ouvertures 375 est visible dans la vue en coupe de la Fig. 2.

Les deux pattes de verrouillage 370 sont reliées chacune à l'évidement 360 par deux nervures de rigidification non représentées.

La base des pattes de verrouillage 370 se trouve dans l'évidement 360 à son débouché dans le plan extérieur 331.

Chaque patte de verrouillage 370 se termine par une portion cylindrique 376 coaxiale au cylindre 310a et une portion de couronne 377 qui lui est perpendiculaire. La portion cylindrique 376 et la portion de couronne 377 sont prévues pour coopérer avec respectivement le tronçon cylindrique 140 et l'épaulement 160 de la partie mâle A lorsque celle-ci est dans la partie B.

Les pattes de verrouillage 370 produisent alors un effet de harpon anti-retour lorsque la pointe conique 110 du poinçon 100 a été introduite de force dans l'évidement 360 de la partie B.

Le verrou 300 de la partie femelle B peut être fabriqué par un procédé de surmoulage par injection plastique. La matière utilisée est, dans un mode de réalisation avantageux, du polyoxyméthylène POM ou un TPE soudant, à dureté élevée permettant notamment d'obtenir une bonne tenue mécanique des pattes de verrouillage 370.

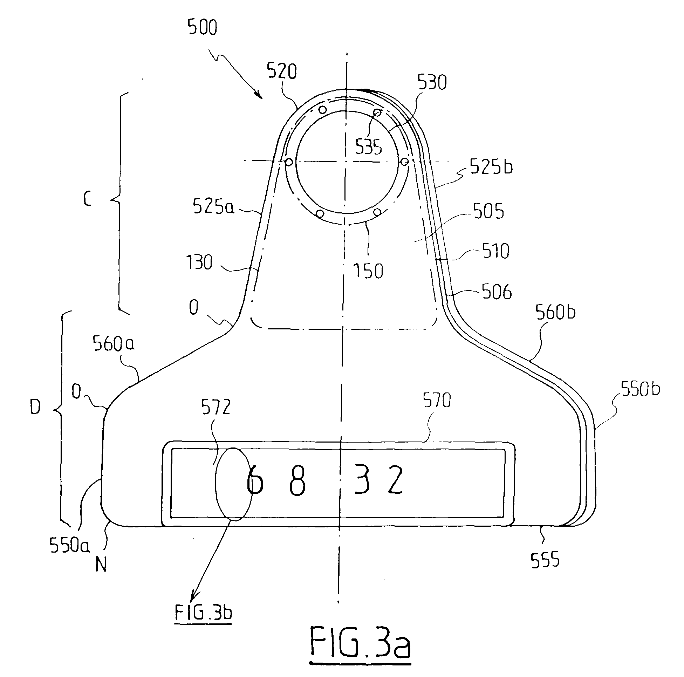

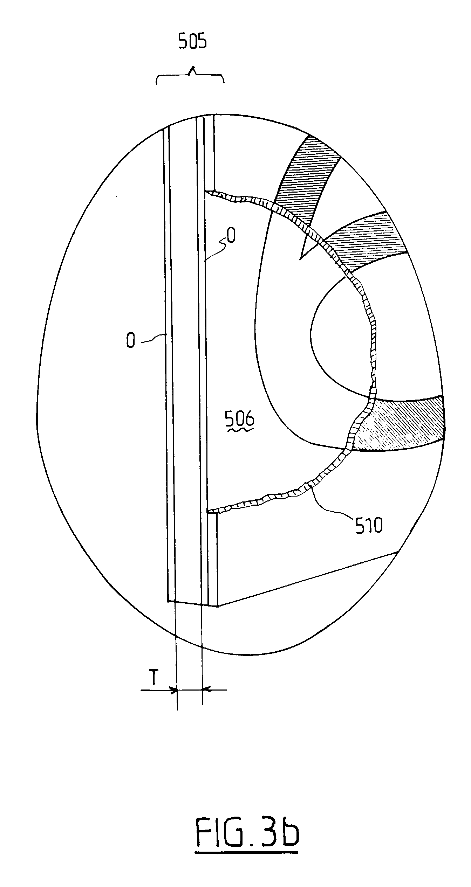

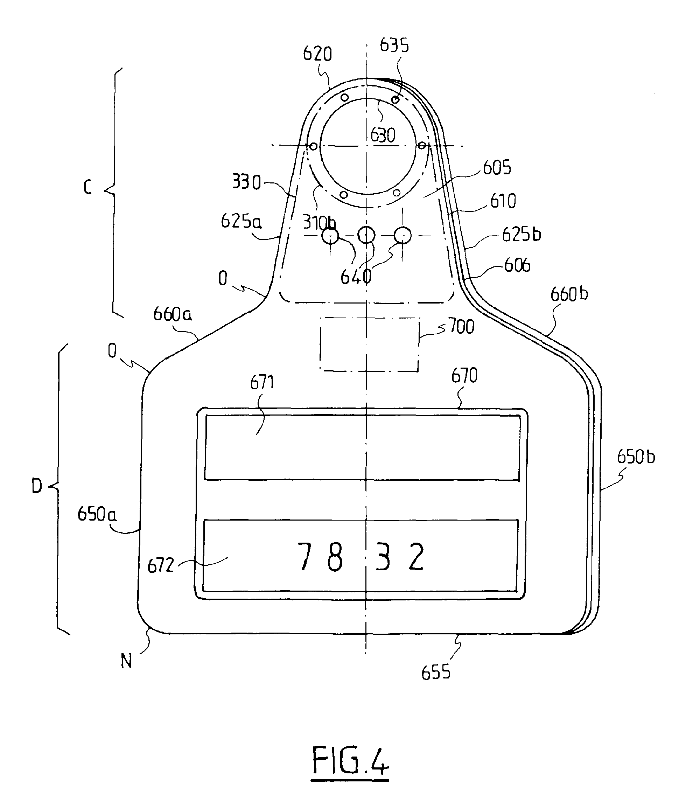

Les Figs. 3a, 3b et 4 représentent respectivement une première étiquette 500, un détail de construction de ladite première étiquette et une seconde étiquette 600.

La première étiquette 500 et la seconde étiquette 600 sont destinées à être assemblées respectivement par un surmoulage soudant avec le poinçon 100 et le verrou 300.

La première étiquette 500 est symétrique dans un plan médian. Elle est formée comme cela est représenté à la Fig. 3b d'une bande enduite 505 constituée d'une trame tissée T en fibre de polyester enduite sur ses deux faces d'une couche O de polychlorure de vinyle nitrile butadiène styrène, souple, par un procédé d'imprégnation.

L'une des deux faces, la face 506 est recouverte d'un film transparent 510 pelliculé à chaud et résistant à l'abrasion, aux rayonnements ultraviolets ainsi qu'au pelage.

La première étiquette 500 en outre comporte une première partie de surmoulage C associée à une seconde partie d'identification D.

La périphérie de la partie de surmoulage C a une forme arrondie 520 à son extrémité libre, raccordée de part et d'autre à une première et à une seconde portions droites 525a et 525b formant entre elles un angle légèrement obtus.

Un poinçonnage circulaire 530 est réalisé de manière centrée dans la partie arrondie 520 afin de permettre son assemblage par un surmoulage soudant de la partie cylindrique 150 d'un poinçon 100.

La partie cylindrique 150 et l'embase 130 sont représentées en traits mixtes fins sur la Fig. 3a.

Des trous 535 placés à la périphérie du poinçonnage circulaire 530 participent également à l'assemblage de la première étiquette 500 lors du surmoulage au travers de ceux-ci, des plots de surmoulage 132b du plan intérieur de l'embase 130 du poinçon 100 interdisant en particulier la rotation de la première étiquette 500 avec l'embase 130 lorsqu'elles sont assemblées comme cela est visible à la Fig. 1.

A la Fig. 3a, la périphérie de la partie de surmoulage C de la première étiquette 500 dépasse latéralement de la périphérie de l'embase 130 du poinçon 100 lorsqu'elle est assemblée à celle-ci permettant de conserver à ladite plaquette une souplesse sur toute sa périphérie. Cette construction évite un contact rigide du dispositif d'identification avec l'oreille de l'animal.

La partie d'identification D présente une forme qui peut être personnalisée. Elle est représentée ici rectangulaire avec deux côtés latéraux 550a et 550b et un grand côté 555 dont l'intersection avec chacun des deux côtés latéraux 550a et 550b présente un rayon N.

La partie d'identification D se raccorde aux portions droites 525a et 525b de la partie de surmoulage C par respectivement deux parties obliques 560a et 560b terminées chacune par un rayon O de raccordement.

Le film transparent 510 destiné à recouvrir la face 506 porte une zone d'identification 570 permettant de faire apparaître un code barre 571 et/ou une référence alphanumérique 572.

A la Fig. 3a, seule une référence alphanumérique 572 apparaît dans la zone d'identification 570.

Le marquage de cette zone d'identification 570 est réalisé par une opération de transfert sur le revers du film transparent 510 avant son pelliculage à chaud.

Ce mode opératoire apporte un meilleur contraste et une meilleure définition de marquage que ne le permettent les autres modes opératoires connus.

Lors de l'assemblage de la première étiquette 500 avec le poinçon 100, la zone d'identification 570 est orientée de manière opposée à la pointe conique 110.

A la Fig. 4, une seconde étiquette 600 symétrique dans son plan médian est représentée. Cette seconde étiquette 600 diffère de la première étiquette 500 par sa hauteur plus importante.

Elle est également constituée d'une trame tissée en fibre polyester enduite sur ses deux faces d'une couche de polychlorure de vinyle nitrile butadiène styrène, souple, par un procédé d'imprégnation.

L'une des deux faces, la face 606 est recouverte d'un film transparent 610 pelliculé à chaud en usine résistant à l'abrasion et aux rayonnements ultraviolets ainsi qu'au pelage.

La seconde étiquette 600 comporte une première partie de surmoulage C associée à une seconde partie d'identification D.

La périphérie de la partie de surmoulage C a une forme arrondie 620 à son extrémité libre, raccordée de part et d'autre à une première et à une seconde portions droites 625a et 625b en formant entre elles un angle légèrement obtus.

Un poinçonnage circulaire 630 est réalisé de manière centrée dans la partie arrondie 620 afin de permettre son assemblage par un surmoulage soudant de la portion cylindrique 310b raccordée à l'embase 330 du verrou 300.

La portion cylindrique 310b et l'embase 330 sont représentées en traits mixtes fins.

Des trous 635 placés à la périphérie du poinçonnage circulaire 630, ainsi que trois orifices 640 positionnés en regard de l'embase de forme trapézoïdale 330 assurent la liaison mécanique définitive par un surmoulage soudant de la seconde étiquette 600 avec l'embase 330, lorsqu'elles sont assemblées comme cela est visible à la Fig. 1.

En particulier, les plots de surmoulage 340 traversent les trois orifices 640 pendant l'opération de surmoulage.

A la Fig. 4, la périphérie de la partie de surmoulage C de la seconde étiquette 600 dépasse latéralement de l'embase 330 du verrou 300 lorsqu'elle est assemblée à celle-ci permettant de conserver à ladite plaquette une souplesse sur toute sa périphérie. Cette construction évite un contact rigide du dispositif d'identification avec l'oreille de l'animal.

La partie d'identification D présente une forme personnalisable représentée ici rectangulaire avec deux côtés latéraux 650a et 650b et un grand côté 655 dont l'intersection avec chacun des deux côtés latéraux 650a et 650b présentent un rayon N.

La partie d'identification D se raccorde aux parties droites 625a et 625b de la partie de surmoulage C par respectivement deux parties obliques 660a et 660b terminées chacune par un rayon O de raccordement.

Le film transparent 610 destiné à recouvrir la face 606 porte une zone d'identification 670 permettant de faire apparaître un code barre 671 et/ou une référence alphanumérique 672.

A la Fig. 4, un code barre 671 et une référence alphanumérique 572 apparaissent dans la zone d'identification 570.

Le marquage de cette zone d'identification 670 est réalisé par une opération de transfert sur le revers du film transparent 610 avant son pelliculage à chaud.

Ce mode opératoire apporte un meilleur contraste et une meilleure définition de marquage que ne le permettent les autres modes opératoires connus.

La dépose du film transparent 510, 610 sur la bande enduite 505, 605 par pelliculage à chaud, rend impossible la falsification de la zone d'identification 570, 670.

Lors de l'assemblage de la seconde étiquette 600 avec le verrou 300, la zone d'identification 670 est orientée du même côté que l'extrémité cylindrique 311 du cylindre 310a.

Un circuit électronique radiofréquence d'identification 700 peut prendre place entre la bande enduite 505, 605 et le film transparent 510, 610 de l'une des étiquettes respectivement 500 ou 600. Il permet de consigner des informations concernant l'animal dans une mémoire dudit circuit.

Le circuit électronique radiofréquence d'identification 700 est représenté aux Figs. 2 et 4 après qu'il ait été monté en sandwich entre la bande enduite 505, 605 et le film transparent 510, 610 de l'une des étiquettes respectivement 500 ou 600.

Le circuit électronique radiofréquence d'identification 700 est également visible après son montage.

Les étiquettes 500 et 600 sont découpées de préférence par un procédé de découpage programmable de la bande enduite 505, 605 revêtue de son film transparent 510, 610 qui permet d'obtenir des variantes de formes suivant le type d'animaux auquel elles sont destinées.

Une oreille d'un animal à identifier est poinçonnée avec la pointe conique 110 du poinçon 100 de la partie mâle A d'un dispositif d'identification infalsifiable à usage unique pour animaux d'élevage. La partie femelle B est emboîtée sur la partie mâle A de manière à ce que l'évidement 360 recouvre la pointe conique 110.

Les pattes de verrouillage 370 entrent en contact avec la pointe conique 110, puis avec la partie cylindrique 120 lors de l'avancement relatif de la pointe conique 110 dans l'évidement 360.

La pointe conique 110 se déforme lors de ce mouvement, jusqu'à ce que l'épaulement 160 tombe dans la gorge 165 située en aval de l'épaulement 160 du poinçon 100 et en retrouvant leurs formes naturelles. La partie mâle A est alors emboîtée de façon définitive dans la partie femelle B en conservant cependant la possibilité de pouvoir tourner dans celle-ci.

La portion de couronne 377 de chacune des pattes de verrouillage 370 entre en contact avec l'épaulement 160, et la portion cylindrique 376 entre en contact avec le tronçon cylindrique 140 de la pointe conique 110.

Toute traction de la partie mâle A hors de la partie femelle B arc-boute les pattes de verrouillage 370, ce qui accroît l'effort de serrage de leurs portions cylindriques 376 respectives avec le tronçon cylindrique 140. Les pattes de verrouillage 370 travaillent en compression et offrent de ce fait une bonne résistance à la rupture.

Si un effort de traction trop important est exercé sur la partie mâle A pour l'extraire de la partie femelle B, la zone de striction S se rompt, et la partie mâle A est désolidarisée définitivement de la partie femelle B.

Cette situation peut arriver si l'on essaie de remplacer le dispositif d'identification infalsifiable à usage unique par un autre, en voulant le séparer de l'oreille de l'animal.

Par ailleurs, toute tentative d'accès au circuit électronique radiofréquence d'identification 700 disposé entre la bande enduite 505, 605 et le film transparent 510, 610 de l'une des étiquettes respectivement 500 ou 600, pour tenter de le modifier ou de le remplacer, entraîne la destruction du film.

Le dispositif d'identification infalsifiable à usage unique pour animaux d'élevage fixé sur l'oreille d'un animal est à usage unique. Il présente une grande sûreté d'utilisation. Il ne peut pas être démonté sans que cela entraîne sa destruction.

Le procédé de fabrication et la matière de chaque constituant du dispositif d'identification infalsifiable à usage unique pour animaux d'élevage sont choisis pour répondre à la fonction que doit remplir chacun de ces constituants.

Les étiquettes sont conçues à partir d'une trame tissée enduite ce qui les rend souples et très résistantes au déchirement.

Par ailleurs, la fabrication des étiquettes par un procédé d'enduction est particulièrement économique.

Le film plastique transparent pelliculé à chaud sur la bande enduite offre de bonnes caractéristiques de résistance à l'abrasion, ainsi qu'aux rayonnements ultraviolets et au pelage.

La bande enduite est disponible dans une grande variété de couleurs permettant ainsi une variante de codification.

Les marquages réalisés sur la zone d'identification sont également infalsifiables.

La forme des étiquettes est réalisée par un procédé de découpe programmable et peut donc facilement être modifiée lors d'un changement de fabrication.

Ce procédé de fabrication des étiquettes se démarque du procédé d'injection plastique utilisé couramment pour cette application par un coût de mise en oeuvre plus réduit, et une flexibilité optimale du procédé de fabrication, possible, grâce à ce concept de produits.

En effet, le procédé d'injection plastique nécessite un investissement en moule pour chaque format souhaité.

Le poinçon de la partie mâle A et le verrou de la partie femelle B sont des éléments standards pour tous les types d'étiquettes auxquels ils sont associés.

Ils sont fabriqués dans une matière plastique adaptée à la fonction remplie par chacun de ces éléments.

La faculté de pouvoir choisir la matière utilisée pour fabriquer ces éléments permet d'en réduire le prix de revient.

Les dimensions de ces éléments peuvent ainsi être déterminées au plus juste pour offrir les caractéristiques mécaniques.

Ces éléments sont fabriqués par un procédé d'injection plastique ne nécessitant qu'un format de moule.

Le poinçon demeure souple, alors que le verrou oppose une raideur des pattes de verrouillage le constituant.

Les poinçons peuvent être comme les étiquettes, de couleurs variables suivant des critères de codification.

## Revendications

1. Dispositif d'identification infalsifiable à usage unique pour animaux d'élevage constitué d'une partie mâle A comprenant un poinçon (100) et une première étiquette (500) et d'une partie femelle B comprenant un verrou (300) et une seconde étiquette (600), ledit poinçon (100) étant prévu pour s'emboîter de manière irréversible dans ledit verrou (300), caractérisé en ce que ledit poinçon (100) et ladite première étiquette (500), d'une part, et ledit verrou (300) et ladite seconde étiquette (600), d'autre part, sont des éléments distincts rendus solidaires les uns des autres par un surmoulage soudant.

2. Dispositif selon la revendication 1, caractérisé en ce que les étiquettes (500, 600) sont réalisées dans une bande enduite (505, 605) constituée d'une trame tissée T en fibre de polyester enduite sur ses deux faces d'une couche O de PVC.

3. Dispositif selon la revendication 2, caractérisé en ce que les étiquettes (500, 600) sont découpées dans la bande enduite (505, 605).

4. Dispositif selon l'une des revendications 2 ou 3, caractérisé en ce que les étiquettes (500, 600) comportent une face (506, 606) pourvue d'un marquage de type code barre (571, 671) et/ou référence alphanumérique (572, 672) réalisé par une opération de transfert sur le revers d'un film transparent (510) avant son pelliculage à chaud sur la face (506, 606).

5. Dispositif selon la revendication 1, du type où le poinçon (100) comporte une pointe conique (110) et un tronçon (140) coaxiaux entre eux définissant ensemble un épaulement (160), caractérisé en ce que ledit verrou (300) présente un évidement (360) recevant au moins deux pattes de verrouillage (370) orientées vers l'intérieur dudit évidement (360), l'épaulement (160) dudit poinçon (100) étant prévu pour pouvoir coopérer avec une portion de couronne (377) réalisant la terminaison desdites pattes de verrouillage (370).

6. Dispositif selon l'une des revendications précédentes, caractérisé en ce que ledit poinçon (100) comporte une zone de striction S formée par une gorge (165) sur sa périphérie.

7. Dispositif selon l'une des revendications précédentes, caractérisé en ce qu'un circuit électronique radiofréquence d'identification (700) est disposé en sandwich entre la face (506, 606) et le film transparent (510, 610) pelliculé à chaud ultérieurement sur la face (506, 606).

8. Dispositif selon l'une des revendications précédentes, caractérisé en ce qu'un bouchon (400) peut être rapporté sur une extrémité cylindrique (311) du cylindre (310a) dudit verrou (300).

9. Dispositif selon l'une des revendications précédentes, caractérisé en ce que le poinçon (100) est mobile en rotation par rapport au verrou (300) après l'emboîture de l'un dans l'autre.
